Europäisches Patentamt

European Patent Office

Office européen des brevets

(11) Veröffentlichungsnummer: **0 098 423**
**B1**

(12) **EUROPÄISCHE PATENTSCHRIFT**

(45) Veröffentlichungstag der Patentschrift: **11.02.87**

(51) Int. Cl.⁴: **G 01 J 3/28**

(21) Anmeldenummer: **83105898.7**

(22) Anmeldetag: **16.06.83**

(54) **Gitterspektrometer.**

(30) Priorität: **02.07.82 DE 3224736**

(43) Veröffentlichungstag der Anmeldung:
**18.01.84 Patentblatt 84/03**

(45) Bekanntmachung des Hinweises auf die
Patenterteilung:
**11.02.87 Patentblatt 87/07**

(84) Benannte Vertragsstaaten:
**DE FR GB IT**

(56) Entgegenhaltungen:
**DE-A-2 623 571**
**US-A-2 866 899**

(73) Patentinhaber: **Bodenseewerk Perkin-Elmer &
Co. GmbH
Alte Nussdorfer Strasse 15 Postfach 1120
D-7770 Überlingen/Bodensee (DE)**

(72) Erfinder: **Witte, Wolfgang, Dr.
Burgbergring 9
D-7770 Überlingen/Bodensee (DE)**

(74) Vertreter: **Weisse, Jürgen, Dipl.-Phys. et al
Patentanwälte Dipl.-Phys. Jürgen Weisse Dipl.-
Chem. Dr. Rudolf Wolgast Bökenbusch 41
Postfach 11 03 86
D-5620 Velbert 11 Langenberg (DE)**

Courier Press, Leamington Spa, England.

**0 098 423**

**Beschreibung**

Die Erfindung betrifft ein Gitterspektrometer, dessen Gitter in mehreren Gitter ordnungen benutzt wird, enthaltend:

(a) eine Gitteranordnung zur spektralen Zerlegung eines einfallenden Lichtbündels,

(b) eine Filterwechseleinrichtung mit mehreren unterschiedlichen Filtern bekannten Transmissionsverlaufs, die nacheinander in den Strahlengang des Gitterspektrometers bewegbar sind, und

(c) mehrere Detektoren, die von dem spektral zerlegten Licht beaufschlagt sind,

Ein Gitterspektrometer enthält eine Gitteranordnung mit einem Beugungsgitter, das eine Vielzahl eng nebeneinander verlaufender Gitterfurchen aufweist und auf welches von einem geeigneten optischen System ein durch einen Eintrittsspalt tretendes und dann parallelgerichtetes, einfallendes Lichtbündel geleitet wird. Das von dem Beugungsgitter zurückgeworfene Licht ist spektral zerlegt. Licht einer bestimmten Wellenlänge wird jeweils unter denjenigen Winkeln zurückgeworfen, für welche die optische Weglängendifferenz des an den Gitterfurchen gebeugten Lichts ein ganzzahliges Vielfaches der Wellenlänge beträgt. Das Licht jeder Wellenlänge wird daher unter verschiedenen Winkeln zurückgeworfen, die optischen Weglängendifferenzen von einer, zwei, drei usw. Wellenlängen entspricht. Ein einfallendes weißes, paralleles Lichtbündel wird daher in verschiedenfarbige, d.h. verschiedenen Wellenlängen entsprechende, unter verschiedenen Winkeln zurückgeworfene parallele Lichtbündel aufgefächert. Jeder Wellenlänge sind dabei mehrere solcher Lichtbündel zugeordnet, die Weglängenunterschieden von dem Einfachen, Doppelten, Dreifachen usw. der Wellenlänge entsprechen. Diese verschiedenen gebeugten Lichtbündel einer Wellenlänge bezeichnet man als "Gitterordnungen". Es können dabei in eine Richtung, in welche Lichtbündel einer Wellenlänge in "erster Ordnung" gebeugt werden, andere Wellenlängen in zweiter, dritter usw. Ordnung gebeugt werden, so daß sich die Lichtbündel der verschiedenen Ordnungen überlagern.

Die gebeugten Lichtbündel werden durch ein optisches System gesammelt, so daß in der Ebene eines Austrittsspalts ein Spektrum erzeugt wird, das aus reellen Bildern des Eintrittsspalts besteht, die von den verschiedenfarbigen Lichtbündeln erzeugt werden. Der Austrittsspalt läßt davon Licht durch, das in eine bestimmte Richtung gebeugt und durch das optische System am Ort des Austrittsspalts gesammelt wird. Das durch den Austrittsspalt fallende Licht wird auf einen Detektor geleitet. Durch Verschwenken des Beugungsgitters kann das Spektrum abgetastet, d.h. können nacheinander die in die verschiedenen Richtungen gebeugten Lichtbündel auf den Austrittsspalt geleitet werden.

Es sind auch Spektrometer bekannt bei denen die gebeugten Lichtbündel durch das optische System auf einem Dioden-Array gesammelt werden. Das ist eine Anordnung von dicht nebeneinander angeordneten Photodioden. Bei Verwendung eines solchen Dioden-Arrays wird das Spektrum nicht abgetastet, sondern die verschiedenen Wellenlängen werden gleichzeitig erfaßt und die zugehörigen Detektorsignale werden parallel ausgegeben.

Es ist natürlich erwünscht, jeweils nur Licht einer Wellenlänge zu messen, d.h. nur eine Gitteranordnung zu erfassen. Üblicherweise wird nur die erste Gitterordnung verwendet. Die nicht gewünschten Gitterordnungen müssen unterdrückt werden. Das kann durch ein Kantenfilter oder durch einen Prismenvormonochromator erreicht werden. Im UV kann auch Luft als geeignetes Kantenfilter wirken.

In der ersten Gitterordnung kann ein Filter fast über eine ganze Oktave hinweg benutzt werden, ehe eine höhere Gitterordnung störend auftritt und das Filter gewechselt werden muß. Ein einziges Beugungsgitter kann jedoch mehr als zwei Oktaven überstreichen, z.B. den Spektralbereich von 190 nm bis 900 nm. Dieser große Spektralbereich erfordert eine entsprechend große Anzahl von Filtern, die nacheinander in den Strahlengang geschwenkt werden müssen. Jeder Filterwechsel ändert die optischen Verhältnisse, so daß leicht Filtersprünge oder Filterspikes in der 100%-Linie auftreten. Es ist zwar bekannt, solche Filterspikes durch Stillsetzen des Wellenlängenvorschubs und der Schreibfeder und durch Vornahme des Filterwechsels in der Registrierpause weitgehend zu vermeiden. Es erfordert jedoch einen erheblichen Aufwand, diese Registrierpausen automatisch zu bewirken. Auch wird die zur Aufnahme eines Spektrums in dem Wellenlängenbereich erforderliche Registrierzeit in unerwünschter Weise verlängert. Schließlich ändert sich bei jedem Filterwechsel das Streulicht sprunghaft. Bei hohen Probenextinktionen können dann leicht Sprünge in der Registrierung auftreten, auch wenn die 100%-Linie keine Sprünge aufweist.

Ein weiterer Nachteil eines Beugungsgitters, das in der ersten Gitterordnung über einen großen Wellenlängenbreich benutzt wird, besteht in der geringen Ausbeute (Efficiency) des Beugungsgitters an den Bereichsenden. Diese Verminderung der Ausbeute fällt meist noch mit einem Abfall der spektralen Lampenintensität oder der spektralen Empfängerempfindlichkeit zusammen.

Es ist auch bekannt, das Beugungsgitter in einem längerwelligen Teilbereich in der ersten und in einem kürzerwelligen Teilbereich in der zweiten Gitterordnung zu verwenden. Das erfordert jedoch einen noch häufigeren Filterwechsel und die Verwendung von Bandfiltern.

Bei Verwendung eines Dioden-Arrays als Detektor kann von dem Dioden-Array jeweils höchstens eine Oktave erfaßt werden, wenn die höheren Gitterordnungen durch ein Kantenfilter unterdrückt werden sollen. Da die Flanken des Kantenfilters nicht unendlich steil sind, ist der von dem Dioden-Array auf einmal erfaßbare Bereich sogar deutlich weniger als eine Oktave. Um einen größeren Spektralbereich mit einer solchen Detektoranordnung auszumessen, ist es also erforderlich, das Spektrum stückweise aufzunehmen und zwischenzeitlich das Beugungsgitter zu verdrehen.

Der Erfindung liegt die Aufgabe zugrunde, ein Gitterspektrometer der eingangs definierten Art so auszubilden, daß

(1) der gesamte untersuchte Spektralbereich jeweils mit einem Filter gemessen wird, so daß keine Sprünge durch Filterwechsel auftreten,
(2) preisgünstige Filter verwendet werden können und
(3) ein großer Spektralbereich erfaßt werden kann.

Erfindungsgemäß wird diese Aufgabe gelöst durch
(d) Speicher für die Transmissionsverläufe der Filter,
(e) Speicher für die erhaltenen Überlagerungssignalspektren, wobei $\lambda$ die Wellenlänge ist, die von dem entsprechenden Detektor in erster Gitterordnung empfangen wird,
(f) Rechnermittel,
(f$_1$) auf welche die gespeicherten Transmissionsverläufe und die gespeicherten Überlagerungssignalspektren aufschaltbar sind und
(f$_2$) welche als berechnete Funktion der Wellenlänge ein Signalspektrum nach Maßgabe der spektralen Zusammensetzung des einfallenden Lichtbündels liefern.

Es können dabei weitgehend beliebige Filter benützt werden, sofern ihre Transmissionsverläufe hinreichend unterschiedlich sind. Eines der Filter kann auch ein "100%-Filter" sein, was bedeutet, daß ohne körperliches Filter gearbeitet wird. Die Filter haben nicht die Aufgabe, Gitterordnungen voneinander zu trennen. Es wird bei jeder Vermessung des Spektrums ein einziges Filter benutzt. Dabei sind jeweils mehrere Gitterordnungen überlagert. Das eigentliche Spektrum wird am Schluß durch die Rechnermittel als Funktion der Wellenlänge aus den bei den mehreren Abtastungen oder Messungen mit den verschiedenen Filtern gewonnenen Signalen der Detektoranordnung und den bekannten, vorher gemessenen und gespeicherten Transmissionsverläufen der Filter gebildet. Dabei werden auch die von den zweiten, dritten usw. Gitterordnungen herrührenden Signalanteile verarbeitet, so daß insgesamt ein größerer Wellenlängenbereich erfaßt wird, als mit der Gitter- und Detektoranordnung in erster Gitterordnung vermessen würde.

Ausgestaltungen der Erfindung sind Gegenstand der abhängigen Ansprüche.

Ein Ausführungsbeispiel der Erfindung ist nachstehend unter Bezugnahme auf die zugehörigen Zeichnungen näher erläutert:

Fig. 1 ist eine schematische Darstellung eines Gitterspektrometers.

Fig. 2 zeigt wie die verschiedenen Gitterordnungen auf ein als Detektoranordnung dienendes Dioden-Array fallen.

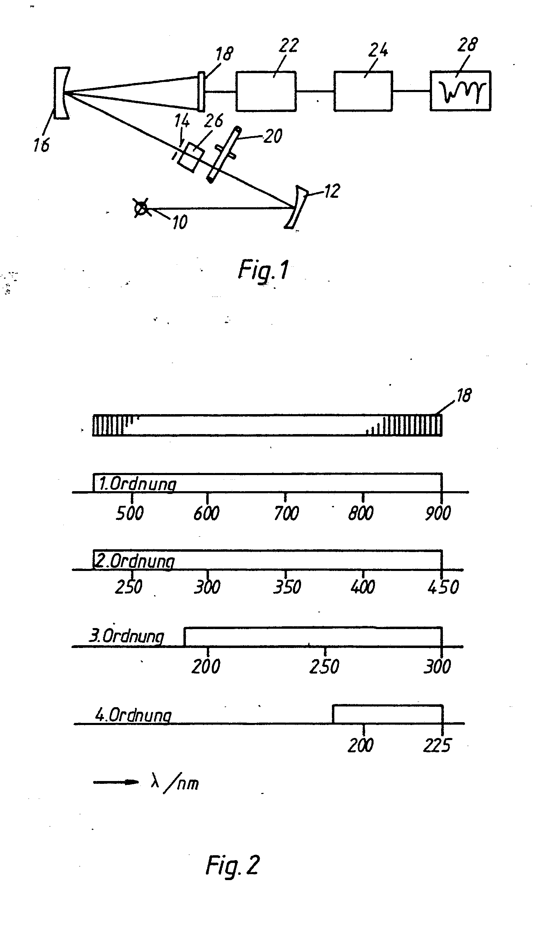

In Fig. 1 ist schematisch ein Gitterspektrometer dargestellt. Eine Lichtquelle 10 wird von einem sphärischen Spiegel 12 auf einen Eintrittsspalt 14 abgebildet. Ein Konkavgitter 16 bildet den Eintrittsspalt 14 wellenlängenabhängig auf einem Dioden-Array 18 ab. Zwischen dem sphärischen Spiegel 12 und dem Eintrittsspalt 14 ist ein Filterrad 20 angeordnet. Das Filterrad 20 trägt vier verschiedene Filter, die bei Drehung des Filterrads 20 nacheinander in den Strahlengang gelangen.

Das Gitterspektrometer erzeugt auf dem Dioden-Array 18 beispielsweise ein Spektrum in der ersten Gitterordnung von 450 nm bis 900 nm. Gleichzeitig fällt auf das Dioden-Array ein Spektrum der zweiten Gitterordnung von 225 nm bis 450 nm und ein Spektrum der dritten Gitterordnung von 150 nm bis 300 nm. Dabei wird jedoch der Bereich von 150 nm bis etwa 190 nm durch die Atmosphäre absorbiert. Schließlich fällt unter Berücksichtigung der atmosphärischen Absorption ein Spektrum der vierten Gitterordnung von etwa 190 nm bis 225 nm auf das Dioden-Array 18. Die fünfte Gitterordnung, deren größte Wellenlänge 180 nm beträgt, wird vollständig von der Atmosphäre absorbiert.

In Fig. 2 ist anschaulich gezeigt, wie die vier Gitterordnungen auf das Dioden-Array 18 fallen. In einem linken Teilbereich des Dioden-Arrays 18 fallen auf jedes Detektorelement gleichzeitig zwei Gitterordnungen, nämlich die erste und zweite Gitterordnung. In einem mittleren Teilbereich des Dioden-Arrays 18 fallen auf jedes Detektorelement gleichzeitig drei Gitterordnungen, nämlich die ersten drei Gitterordnungen. In einem rechten Teilbereich schließlich werden vier Gitterordnungen gleichzeitig aufgenommen, nämlich die ersten vier Gitterordnungen.

Es fallen somit alle vier Gitterordnungen gleichzeitig auf das Dioden-Array 18. Auf ein Detektorelement fällt dabei Strahlung mit zwei oder mehr Wellenlängen, nämlich $\lambda$ und $\lambda/2$ sowie gegebenenfalls $\lambda/3$ und $\lambda/4$. Die vier Anteile müssen getrennt werden. Dazu dienen die vier Filter des Filterrads 20. Diese Filter brauchen jedoch nicht wie bei herkömmlichen Gitterspektrometern die vier Gitterordnungen einzeln herauszutrennen. Es werden keine steilen Kanten- oder Bandfilter benötigt. Die spektralen Transmissionsverläufe der Filter können weitgehend willkürlich gewählt werden.

Die Transmission der vier Filter als Funktion der Wellenlänge $\lambda$ seien $T_1(\lambda)$, $T_2(\lambda)$, $T_3(\lambda)$ und $T_4(\lambda)$. Das von der Strahlung der ersten Gitterordnung ohne Filter erzeugte Detektorsignal, das dem Strahlungsfluß und der Detektorempfindlichkeit proportional ist, ist $S_1(\lambda)$. Die Wellenlänge $\lambda$ überdeckt dabei den Bereich von 450 nm bis 900 nm. Das von de Strahlung der zweiten Gitterordnung ohne Filter erzeugte Detektorsignal ist $S_2(\lambda)$, wobei der Bereich der Wellenlänge $\lambda$ sich von 225 nm bis 450 nm erstreckt. Das von der Strahlung der dritten Gitterordnung ohne Filter erzeugte Detektorsignal ist $S_3(\lambda)$ in dem Bereich der Wellenlänge $\lambda$ von 150 nm bis 300 nm. Das von der Strahlung der vierten Gitterordnung ohne Filter erzeugte Detektorsignal ist $S_4(\lambda)$ in dem Bereich der Wellenlänge $\lambda$ von 112.5 nm bis 225 nm. Die Funktionen $S_3(\lambda)$ und $S_4(\lambda)$ haben wegen der atmosphärischen Absorption bis etwa zu der Wellenlänge $\lambda=190$ nm den Wert null.

Die Detektorelemente des Dioden-Arrays 18 werden nachfolgend durch die auf das jeweilige Detektorelement fallende Wellenlänge $\lambda$ der Strahlung der ersten Gitterordnung gekennzeichnet, wie in Fig. 2 dargestellt ist. Bei Einschaltung der Filter des Filterrads 20 in den Strahlengang ergeben sich für die vier Filter folgende Detektorsignale

$$S_1'(\lambda)=T_1(\lambda)S_1(\lambda)+T_1\left(\frac{\lambda}{2}\right)S_2\left(\frac{\lambda}{2}\right)+T_1\left(\frac{\lambda}{3}\right)S_3\left(\frac{\lambda}{3}\right)+T_1\left(\frac{\lambda}{4}\right)S_4\left(\frac{\lambda}{4}\right)$$

$$S_2'(\lambda)=T_2(\lambda)S_1(\lambda)+T_2\left(\frac{\lambda}{2}\right)S_2\left(\frac{\lambda}{2}\right)+T_2\left(\frac{\lambda}{3}\right)S_3\left(\frac{\lambda}{3}\right)+T_2\left(\frac{\lambda}{4}\right)S_4\left(\frac{\lambda}{4}\right)$$

$$S_3'(\lambda)=T_3(\lambda)S_1(\lambda)+T_3\left(\frac{\lambda}{2}\right)S_2\left(\frac{\lambda}{2}\right)+T_3\left(\frac{\lambda}{3}\right)S_3\left(\frac{\lambda}{3}\right)+T_3\left(\frac{\lambda}{4}\right)S_4\left(\frac{\lambda}{4}\right)$$

$$S_4'(\lambda)=T_4(\lambda)S_1(\lambda)+T_4\left(\frac{\lambda}{2}\right)S_2\left(\frac{\lambda}{2}\right)+T_4\left(\frac{\lambda}{3}\right)S_3\left(\frac{\lambda}{3}\right)+T_4\left(\frac{\lambda}{4}\right)S_4\left(\frac{\lambda}{4}\right)$$

Dabei sind die Funktionen $T_1$, $T_2$, $T_3$ und $T_4$ bekannt. Die $S_1'$, $S_2'$, $S_3'$ und $S_4'$ werden gemessen. Es ergibt sich somit für jedes $\lambda$, d.h. für jedes Detektorelement des Dioden-Arrays 18 ein System von vier Gleichungen für die vier Unbekannten, nämlich die Signalanteile

$$S_1(\lambda),\ S_2\left(\frac{\lambda}{2}\right),\ S_3\left(\frac{\lambda}{3}\right)\ \text{und}\ S_4\left(\frac{\lambda}{4}\right)$$

der vier Gitterordnungen an dem Detektorsignal des durch $\lambda$ charakterisierten Detektorelements. Daraus können diese Signalanteile in bekannter Weise, z.B. über Determinanten, gelöst werden.

Die Lösung des Gleichungssystems ist nur möglich, wenn die aus den sechzehn T-Werten gebildete Determinate nicht verschwindet. Die Transmissionsverläufe der Filter müssen also so gewählt sein, daß dies gewährleistet ist. Das ist aber eine leicht zu erfüllende Forderung.

Es ist weiterhin darauf zu achten, daß die Determinate nicht zu klein wird. Die Unterschiede in den Kurvenformen der Transmissionsverläufe und in den Linearkombinationen von Transmissionsverläufen darf nicht zu klein werden.

Im allgemeinen sind diese Bedingungen mit billigen Glasfiltern leicht zu erfüllen.

Die vier Filter werden durch das Filterrad 20 nacheinander in den Strahlengang geschwenkt. Mit jedem Filter wird durch das Dioden-Array 18 das zugehörige Signalspektrum $S_i'(\lambda)$ aufgenommen. Diese Signalspektren werden in einem Speicher 22 gespeichert. Ebenso sind in dem Speicher 22 die Funktionen $T_2(\lambda)$, $T_2(\lambda)$, $T_3(\lambda)$ und $T_4(\lambda)$ gespeichert. Die Signalspektren $S_i'(\lambda)$ und die Funktionen $T_i(\lambda)$ werden einem Rechner 24 zugeführt. Der Rechner 24 löst das oben angegebene Gleichungssystem. Es ergeben sich in dem genannten Beispiel vier Signal-Teilspektren:

$S_1(\lambda)$ für $\lambda=450$ nm bis $\lambda=900$ nm
$S_2(\lambda)$ für $\lambda=225$ nm bis $\lambda=450$ nm
$S_3(\lambda)$ für $\lambda=150$ nm bis $\lambda=300$ nm
$S_4(\lambda)$ für $\lambda=112,5$ nm bis $\lambda=225$ nm

Dabei haben die letzten beiden Teilspektren bis etwa $\lambda=190$ nm den Wert null. Gewünscht wird ein durchgehendes Signalspektrum von $\lambda=190$ nm bis $\lambda=900$ nm. Die beiden ersten Signal-Teilspektren schließen sich nahtlos aneinander an. Man kann beispielsweise den Wellenlängenbereich für das erste Signal-Teilspektrum mit $\lambda=451$ beginnen lassen. Der Anschluß kann aber auch in der für die anderen Signal-Teilspektren nachstehend beschriebenen Weise erfolgen.

Das zweite und dritte Signal-Teilspektrum $S_2(\lambda)$ bis $S_3(\lambda)$ überlappen sich im Bereich von 225 nm bis 300 nm. Diese Überlappung kann auf verschiedene Weise behandelt werden. Beispielsweise kann man das Signal-Teilspektrum $S_2(\lambda)$ voll, das Signal-Teilspektrum $S_3(\lambda)$ aber nur bis an die Wellenlänge $\lambda=225$ nm heran auswerten. Der Bereich von 225 nm bis 300 nm wird dann in dem dritten Signal-Teilspektrum $S_3(\lambda)$ unberücksichtigt gelassen. Natürlich kann man auch umgekehrt verfahren und das Signal-Teilspektrum

4

$S_3(\lambda)$ voll ausnutzen und bei dem Signal-Teilspektrum $S_2(\lambda)$ einen Wellenlängenbereich auslassen. Es ist auch möglich, die Nahtstelle irgendwo in den Überlappungsbereich zu legen. Man kann auch, um beide Informationen auszunutzen, im Überlappungsbereich den Mittelwert der beiden Signal-Teilspektren bilden. Um Sprünge in dem erhaltenen Signalspektrum zu vermeiden, kann schließlich im Überlappungsbereich das eine Signal-Teilspektrum $S_2(\lambda)$ mit einem mit der Wellenlänge $\lambda$ zunehmenden Gewicht und das andere Signal-Teilspektrum $S_3(\lambda)$ mit einem mit der Wellenlänge $\lambda$ abnehmenden Gewicht bei der Mittelwertbildung bewertet werden. Ein solcher stetiger Übergang ist besonders dann vorteilhaft, wenn die Streulichteinflüsse in den sich überlappenden Teilbereichen unterschiedlich sind und bei hohen Probenextinktionen Sprünge vermieden werden sollen.

Die gleichen Verfahren sind im Überlappungsbereich der beiden Signal-Teilspektren $S_3(\lambda)$ und $S_4(\lambda)$ anwendbar. Hier ergibt sich die Besonderheit, daß man auf das Signal-Teilspektrum $S_4(\lambda)$ ganz verzichten kann, da der Wellenlängenbereich des Signal-Teilspektrums $S_3(\lambda)$ bereits an die kurzwellige Grenze von $\lambda=190$ nm heranreicht. Das Signal-Teilspektrum $S_4(\lambda)$ muß nichtsdestoweniger bestimmt werden, da es in dem Gleichungssystem benötigt wird. Die Strahlung der vierten Gitterordnung fällt ja auch tatsächlich auf das Dioden-Array 18.

Das Transmissionsspektrum einer Probe 26 (Fig. 1) kann in bekannter Weise dadurch bestimmt werden, daß das Signalspektrum $S(\lambda)$ einmal ohne Probe 26 (als $S_o(\lambda)$) und einmal mit Probe 26 in der beschriebenen Weise gewonnen wird. Die beiden so erhaltenen Signalspektren $S(\lambda)$ und $S_o(\lambda)$ werden durcheinander dividiert. Das Transmissionsspektrum $T(\lambda)$ der Probe ergibt sich aus

$$T(\lambda)=\frac{S(\lambda)}{S_o(\lambda)}$$

Diese Operation wird auch von dem Rechner 24 durchgeführt. Das erhaltene Transmissionsspektrum $T(\lambda)$ wird auf einem Bildschirm 28 angezeigt.

Bei dem beschriebenen Beispiel entfielen die fünfte und alle höheren Gitterordnungen, da sie von der Atmosphäre absorbiert werden. Die Atmosphäre wirkt wie ein Kantenfilter. Ohne ein solches Kantenfilter oder eine in diesem Sinne wirkende Begrenzung, wie z.B. die spektrale Emissionsgrenze der Lampe 10 oder die spektrale Empfindlichkeitsgrenze des Detektors im Kurzwelligen, werden unendlich viele Gitterordnungen wirksam. Zum rechnerischen Trennen der einzelnen Gitterordnungen wären dann unendlich viele, mit unendlich vielen Filtern aufgenommene Spektren erforderlich. Alle auf den Detektor fallenden Gitterordnungen erzeugen Signale und müssen rechnerisch getrennt werden, auch wenn sie in Spektralbereiche fallen, die für das gewünschte Spektrum nicht interessieren. Andererseits müssen alle Wellenlängen des gewünschten Spektralbereichs in der auffallenden Strahlung enthalten sein. Da die Rechnung umso umfangreicher wird, je mehr Gitterordnungen berücksichtigt werden müssen, ist es zweckmäßig, Strahlung außerhalb des gewünschten Spektralbereichs vom Detektor weitgehend fernzuhalten. Es ist daher häufig erforderlich, daß im Strahlengang ein zusätzliches Filter angeordnet ist, welches die Anzahl der auftretenden Gitterordnungen begrenzt.

Der wirksame Spektralbereich muß in jedem Fall zum Kurzwelligen hin begrenzt sein, während eine Begrenzung zum Langwelligen hin im allgemeinen nicht erforderlich ist. Eine solche Begrenzung wird erforderlich, wenn niedrige Gitterordnungen unterdrückt werden sollen, um z.B. die höhere Auflösung der höheren Gitterordnungen auszunutzen. In diesem Fall ist eine Bandfilterwirkung erforderlich. Es erfolgt dann z.B. mit zwei Filtern mit dem Transmissionsverlauf $T_1(\lambda)$ und $T_2(\lambda)$ die Messung der Signalspektren $S_1'(\lambda)$ und $S_2'(\lambda)$, woraus die Signal-Teilspektren

$$S_2\left(\frac{\lambda}{2}\right) \text{ und } S_2\left(\frac{\lambda}{3}\right)$$

bestimmt werden aus dem Gleichungssystem

$$S_1'(\lambda)=T_1\left(\frac{\lambda}{2}\right)S_1\left(\frac{\lambda}{2}\right)+T_1\left(\frac{\lambda}{3}\right)S_2\left(\frac{\lambda}{3}\right)$$

$$S_2'(\lambda)=T_2\left(\frac{\lambda}{2}\right)S_1\left(\frac{\lambda}{2}\right)+T_2\left(\frac{\lambda}{3}\right)S_2\left(\frac{\lambda}{3}\right).$$

Statt der beschriebenen Detektoranordnung mit einem Dioden-Array kann die Erfindung auch bei einem konventionellen Gitterspektrometer mit einem einzigen Detektor und einer Abtastung des Spektrums durch Verschwenken des Beugungsgitters angewandt werden. Insbesondere ist die Erfindung auch geeignet für Gitterspektrometer mit sehr schnellem periodischen Spektrendurchlauf.

Zur Verringerung des Rauschpegels können mehrere Signalspektren während mehrerer Filterradumdrehungen aufgenommen und gemittelt werden.

Die gespeicherten Transmissionsverläufe $T_i(\lambda)$ der Filter können mit einem üblichen Spektrometer einmal ermittelt und vom Gerätehersteller in dem Speicher 22 gespeichert werden. Das Gitterspektrometer kann aber auch selbst zur Bestimmung der Transmissionsverläufe dienen. Zu diesem Zweck kann das Filterrad 20 in einer Position eine leere Öffnung aufweisen. Die mit den einzelnen Filtern ermittelten Signalspektren werden dann durch das mit der leeren Öffnung ermittelte Signalspektrum dividiert, was die Transmissionen der Filter liefert.

Mit einem Gitterspektrometer wird durch Auswertung der verschiedenen Gitterordnungen ein großer Spektralbereich erfaßt. Dabei arbeitet das Beugungsgitter in jeder Gitterordnung nur in einem kleinen Spektralbereich, in dem die Ausbeute (Efficiency) des Beugungsgitters noch nicht stark abfällt. Die mechanischen Anforderungen an die Genauigkeit des Aufbaus sind gering. Der einzige bewegliche Teil ist ein rotierendes Filterrad. Das Filterrad enthält nur billige Farbglas-Filter.

Die Aufnahme der Spektren kann sehr schnell erfolgen.

**Patentansprüche**

1. Gitterspektrometer, dessen Gitter in mehreren Gitterordnungen benutzt wird, enthaltend:
   (a) eine Gitteranordnung zur spektralen Zerlegung eines einfallenden Lichtbündels,
   (b) eine Filterwechseleinrichtung (20) mit mehreren unterschiedlichen Filtern bekannten Transmissionsverlaufs, die nacheinander in den Strahlengang des Gitterspektrometers bewegbar sind, und
   (c) mehrere Detektoren (18), die von dem spektral zerlegten Licht beaufschlagt sind,
gekennzeichnet durch
   (d) Speicher (22) für die Transmissionsverläufe $T_i(\lambda)$ der Filter,
   (e) Speicher (22) für die erhaltenen Überlagerungssignalspektren $S_i'(\lambda)$, wobei $\lambda$ die Wellenlänge ist, die von dem entsprechenden Detektor in erster Gitterordnung empfangen wird,
   (f) Rechnermittel (24),
   ($f_1$) auf welche die gespeicherten Transmissionsverläufe $T_i(\lambda)$ und die gespeicherten Überlagerungssignalspektren $S_i'(\lambda)$ aufschaltbar sind und
   ($f_2$) welche als berechnete Funktion der Wellenlänge $\lambda$ ein Signalspektrum $S(\lambda)$ nach Maßgabe der spektralen Zusammensetzung des einfallenden Lichtbündels liefern.

2. Gitterspektrometer nach Anspruch 1, dadurch gekennzeichnet, daß die Rechnermittel (24) für jeden Detektor zur Auflösung eines Gleichungssystems

$$S_i'(\lambda) = \sum_{k=1}^{n} T_i\left(\frac{\lambda}{k}\right) S_k\left(\frac{\lambda}{k}\right)$$

eingerichtet sind, wobei

   $n$ die Anzahl der verwendeten Filter und gleichzeitig die Anzahl der auftretenden Gitterordnungen ist,
   $i$ eine Laufzahl ist, wobei jedem Filter eine solche Laufzahl zugeordnet ist,
   $S_i'(\lambda)$ das mit einem Filter "i" erhaltene Überlagerungssignalspektrum ist und
   $S_k\left(\dfrac{\lambda}{k}\right)$ das zu ermittelnde Signal-Teilspektrum des in k-ter Gitterordnung auf den Detektor fallenden Lichts ist.

3. Gitterspektrometer nach Anspruch 1 oder 2, dadurch gekennzeichnet, daß im Strahlengang ein zusätzliches Filter angeordnet ist, welches die Anzahl der auftretenden Gitterordnungen begrenzt.

4. Gitterspektrometer nach einem der Ansprüche 1 bis 3, dadurch gekennzeichnet, daß die Detektoren ein Dioden-Array (18) sind.

**Revendications**

1. Spectromètre à réseau dont le réseau est utilisé dans plusieurs ordres de réseau, comprenant
   (a) une disposition de réseau appelée à spectralement décomposer un faisceau lumineux faisant incidence,
   (b) un dispositif d'échange de filtre (20) ayant plusieurs filtres différents d'un cours de transmission connu qui peuvent être déplacés succéssivement dans la marche des rayons du spectromètre à réseau, et
   (c) plusieurs détecteurs (18) auxquels est appliquée la lumière spectralement décomposée,
caractérisé par
   (d) des mémoires (22) pour les cours de transmission $T_i(\lambda)$ des filtres,

(e) des mémoires (22) pour les spectres de signal de superposition $S_i'(\lambda)$, $\lambda$ étant la longueur d'onde recue par le détecteur correspondant dans le premier ordre de réseau,

(f) des moyens calculateurs (24),

($f_1$) auxquels peuvent être appliqués les cours de transmission mémorisés $T_i(\lambda)$ et les spectres de signal de superposition mémorisés $S_i'(\lambda)$, et

($f_2$) qui fournissent comme fonction calculée de la longueur d'onde $\lambda$, un spectre de signal $S(\lambda)$ selon la composition spectrale du faisceau lumineux faisant incidence.

2. Spectromètre à réseau selon la revendication 1, caractérisé par le fait que les moyens calculateurs (24) sont adaptés pour chaque détecteur à résoudre un système d'équation

$$S_i'(\lambda)= \sum_{k=1}^{n} T_i\!\left(\frac{\lambda}{k}\right)S_k\!\left(\frac{\lambda}{k}\right)$$

$$i=1...n$$

n étant le nombre de filtres utilisés et en même temps le nombre d'ordres de réseau apparaissant,

i étant un nombre d'ordre, un tel nombre d'ordre étant associé à chaque filtre,

$S_i'(\lambda)$ étant le spectre de signal de superposition obtenu avec un filtre "i", et

$S_k\!\left(\frac{\lambda}{k}\right)$ étant le spectre partiel de signal à déterminer de la lumière appliquée au détecteur dans le $k^{ième}$ ordre de réseau.

3. Spectromètre à réseau selon la revendication 1 ou 2, caractérisé par le fait que dans la marche des rayons est disposé un filtre supplémentaire limitant le mombre des ordres de réseau apparaissant.

4. Spectromètre à réseau selon l'une des revendications 1 à 3, caractérisé par le fait que les détecteurs sont un array à diodes (18).

**Claims**

1. Grating spectrometer, the grating of which is used in several grating orders, comprising

(a) a grating arrangement for spectral splitting of an incident light beam,

(b) a filter changing arrangement (20) having several filters of known transmission course, which filters are successively movable into the path of rays of the grating spectrometer, and

(c) several detectors (18), to which the spectrally split light is applied, characterized by

(d) memories (22) for the transmission courses $T_i(\lambda)$ of the filters,

(e) memories (22) for the obtained superposition signal spectra $S_i'(\lambda)$, $\lambda$ being the wavelength received by the corresponding detector in first grating order,

(f) computer means (24),

($f_1$) to which the stored transmission courses $T_i(\lambda)$ and the stored superposition signal spectra $S_i'(\lambda)$ are applied, and

($f_2$) which give a signal spectrum $S(\lambda)$ as calculated function of the wavelength $\lambda$ in accordance with the spectral composition of the incident light beam.

2. Grating spectrometer as set forth in claim 1, characterized in that the computer means (24) for each detector are arranged to resolve a system of equations

$$S_i'(\lambda)= \sum_{k=1}^{n} T_i\!\left(\frac{\lambda}{k}\right)S_k\!\left(\frac{\lambda}{k}\right)$$

$$i=1...n$$

wherein

n is the number of used filters and simultaneously the number of the appearing grating orders, i is a running number, each filter being associated with such a running number,

$S_i'(\lambda)$ is the superposition signal spectrum obtained with a filter "i", and

$S_k\!\left(\frac{\lambda}{k}\right)$ is the signal partial spectrum to be determined of the light applied to the detector in the kth grating order.

3. Grating spectrometer as set forth in claims 1 or 2, characterized in that an additional filter is arranged in the path of rays, which filter limits the number of appearing grating orders.

4. Grating spectrometer as set forth in anyone of the claims 1 to 3, characterized in that the detectors are a diode array (18).

Fig.1

Fig.2